# EUROPÄISCHE PATENTANMELDUNG

(11) **EP 4 517 564 A1**
(43) Veröffentlichungstag der Anmeldung: **05.03.2025**
(21) Anmeldenummer: 23194019.8
(22) Anmeldetag: 29.08.2023
(51) Int. Cl.: G06F 21/10, H04L 9/00

(54) **VERFAHREN ZUM VERWALTEN VON LIZENZEN, SYSTEM, COMPUTERPROGRAMM - PRODUKT UND COMPUTERLESBARES MEDIUM**

(71) Anmelder: Siemens Aktiengesellschaft, 80333 München (DE)
(72) Erfinder: Hinkelmann, Andreas, 91126 Schwabach (DE); Singh, Saurabh Narayan, 81739 München (DE)
(74) Vertreter: Siemens Patent Attorneys

(57) **Zusammenfassung**

Die Erfindung betrifft ein Verfahren, insbesondere computergestütztes Verfahren, zum Verwalten von Lizenzen für Geräte (3), insbesondere für Funktionalitäten von Geräten (3), bevorzugt für Softwareprodukten auf Geräten (3), von Anwendern. Ferner betrifft die Erfindung ein System zum Verwalten von Lizenzen für Geräte (3), insbesondere für Funktionalitäten von Geräten (3), bevorzugt von Softwareprodukten auf Geräten (3), von Anwendern. Außerdem betrifft die Erfindung ein Computer-Programmprodukt sowie ein computerlesbares Medium.

## Beschreibung

Die vorliegende Erfindung betrifft ein Verfahren, insbesondere ein computergestütztes Verfahren, zum Verwalten von Lizenzen für Geräte von Anwendern, insbesondere für Funktionalitäten von Geräten, bevorzugt für Softwareprodukte auf Geräten.

Ferner betrifft die Erfindung ein System zum Verwalten von Lizenzen für Geräte von Anwendern, sowie ein Computerprogramm-Produkt und ein computerlesbares Medium.

Die Anschaffung von Software bzw. von Geräten ist häufig mit hohen Kosten verbunden. Viele Geräte oder Softwareprodukte auf solchen Geräten sind dabei an eine Lizenz gebunden, d.h. nur ein Lizenznehmer darf sie effektiv nutzen. Dazu werden beispielsweise Lizenzschlüssel erteilt und dem jeweiligen Gerät, auf welchem eine Software laufen soll, zugeordnet.

Häufig werden solche Lizenzschlüssel von einem zentralen Lizensierungsnetzwerk oder einem zentralen Lizensierungs-Rechner erstellt und einem Gerät zugewiesen. Solange dem jeweiligen Gerät ein Lizenzschlüssel zugewiesen ist, kann dieses bzw. eine darauf enthaltene Software ohne Probleme genutzt werden.

Neuartige Geschäftsmodelle sind jedoch sehr offen gestaltet. Hier ist es häufig erforderlich, Lizenzen zwischen verschiedenen Geräten zu verschieben. Auch kann sich ein Geschäftsmodell ändern, wenn beispielsweise ein neues Softwareprodukt auf den Markt kommt. Ein solches Softwareprodukt kann ein bestehendes Lizenzzertifikat oder einen bestehenden Lizenzschlüssel möglicherweise nicht korrekt lesen und erfassen.

Manchmal stellt es sich als problematisch heraus, dass viele Geräte, insbesondere im industriellen Bereich, nicht permanent und/oder nicht direkt mit dem Internet verbunden sind, so dass eine Übertragung von Lizenzschlüsseln (License Keys) zu den Geräten über zwischengeschaltete Rechner, sogenannte Mediatoren (Mediators) stattfindet. Auch kann es sein, dass nur gelegentlich die Geräte mit dem Internet verbunden werden, so dass lediglich zu definierten Zeitpunkten eine Aktualisierung von Lizenzschlüsseln bzw. eine Übertragung von Lizenzschlüsseln möglich ist.

Durch eine nicht direkte und nicht kontinuierliche Verbindung mit dem Internet ist es durch ein privates Lizensierungs-Netzwerk eines Anbieters nicht möglich, den Verbleib der Lizenzschlüssel bzw. der Lizenzen permanent zu überwachen. Dies kann dazu führen, dass auch ein Verlust von Lizenzschlüsseln versehentlich durch einen Benutzer nicht klar erkannt werden kann. Dadurch kann ein bösgläubiger Anwender, der vortäuscht, dass er seine Lizenzen verloren hat, weitere Lizenzschlüssel erhalten.

Wenn die entsprechenden Geräte nicht permanent mit dem Internet verbunden sind oder keinen direkten Kontakt zu einem zentralen Lizensierungs-Netzwerk eines Anbieters haben, so besteht die Möglichkeit, Lizenzen auch ohne Verbindung zu dem zentralen Lizensierungsnetzwerk zu übertragen. Dazu können die Lizenzschlüssel auf einem portablen Speichermedium wie beispielsweise einer SD-Karte gespeichert werden und dieses Speichermedium dann mit dem entsprechenden Gerät verbunden werden. Die Lizenz kann dadurch über das portable Speichermedium von einem Gerät auf ein anderes übertragen werden.

Auch wenn eine solche Vorgehensweise sich grundsätzlich bewährt hat, so liegt jedoch eine erhebliche Missbrauchsmöglichkeit vor. Beispielsweise können Lizenzen geklont werden, indem eine solche Lizenz auf ein Gerät übertragen wird, dann ein Backup dieses Geräts erstellt wird einschließlich der darin enthaltenen Lizenz, anschließend die Lizenz auf ein anderes Gerät übertragen wird und das Backup mit der darin enthaltenen Lizenz wiederhergestellt wird.

Auf diese Weise kann eine Lizenz dazu benutzt werden, mehrere Geräte parallel zu betreiben, selbst wenn nur eine Lizenz für ein Gerät erworben wurde.

Eine Möglichkeit, dieser Problematik zu begegnen, besteht darin, Lizenzschlüssel nicht mehr auf die Geräte zu übertragen, sondern diese in einer Cloud-Lösung bereitzuhalten. Dabei kann auch die verwendete Software zumindest teilweise in der Cloud enthalten sein. Hierbei ist jedoch problematisch, dass erfahrungsgemäß viele Anwender ihre Geräte aus Sicherheitsgründen nicht mit dem Internet verbinden und damit eine Lizenzvergabe in der Cloud bereits scheitert. Außerdem erfordern viele Geräte schnelle Reaktionszeiten im Millisekundenbereich. Auch dies ist nicht möglich mit einer cloudbasierten Lösung.

Vor diesem Hintergrund besteht die Aufgabe der vorliegenden Erfindung darin, ein alternatives Verfahren zum Verwalten von Lizenzen bereitzustellen, welches insbesondere die zuvor genannten Nachteile vermeidet und einen Missbrauch, insbesondere ein unberechtigtes Vervielfältigen von Lizenzen, mit einer hohen Sicherheit verhindert.

Diese Aufgabe ist gelöst bei einem Verfahren der eingangs genannten Art, welches die folgenden Schritte aufweist:
- Bereitstellen oder Erzeugen einer Blockchain- Datenstruktur, welche eine dem jeweiligen Anwender zugeordnete Sidechain aufweist;
- Bereitstellen oder Erzeugen eines non-fungible Tokens, welcher eine Lizenz für ein Gerät repräsentiert;
- Übertragen des non-fungible Tokens in ein geräte- und anwenderbezogenes Wallet, um das Gerät zur Benutzung durch den Anwender freizugeben, wobei Transaktionsdaten betreffend die Übertragung in einem Block der jeweiligen Sidechain abgelegt werden.

Die Erfindung basiert auf der grundsätzlichen Überlegung, non-fungible Tokens praktisch als digitale Zwillinge der Lizenzen zu nutzen und dadurch eine unberechtigte Vervielfältigung von Lizenzen zu verhindern, da solche non-fungible Token Lizenzen einzigartig sind und nicht vervielfältigt werden können. Ein non-fungible Token ist bevorzugt ein kryptografisch eindeutiges, unteilbares und unersetzbares, sowie überprüfbares Token, das einen bestimmten Gegenstand, vorliegend eine Lizenz, repräsentiert.

Der Grund, warum eine Vervielfältigung der non-fungible Tokens ausgeschlossen ist, liegt in der Blockchain-Datenstruktur. Hierbei handelt es sich bevorzugt eine verteilte, dezentrale Datenbank, in der Transaktionen manipulationsgeschützt abgelegt werden können. Eine Blockchain-Datenstruktur enthält eine Vielzahl von Blöcken, wobei die einzelnen Blöcke nacheinander der vorhandenen Datenstruktur hinzugefügt werden. Neben einer oder mehreren Transaktionen ist in jedem Block ein sogenannter Hashwert des Vorgängerblocks hinterlegt. Der hohe Sicherheitsstandard einer Blockchain-Datenstruktur entsteht durch eine Mehrheit von vertrauenswürdigen Knoten in einem Blockchain-Netz- oder Netzwerk, welches ein sogenanntes Validieren von Blöcken durchführt. Im Netz der an einer Blockchain teilnehmenden Knoten wird in regelmäßigen Abständen, beispielsweise alle fünf oder zehn Minuten, ein neuer Block gebildet und dabei der Hashwert eines bestehenden Blockes mit hinterlegt. Dadurch wird die Gültigkeit von dem Block zu hinterlegenden Transaktionen geprüft.

Die Kette der Blöcke ist somit bei einer Vielzahl von Blockchain-Knoten gespeichert, und es erfolgt regelmäßig eine Synchronisation der teilnehmenden Knoten. Die Information zu den Transaktionen ist also redundant im Blockchain-Netzwerk hinterlegt.

Da alle Blöcke basierend auf bestehenden Blöcken gebildet werden, indem der Hashwert des Vorgängerblocks in einen neuen Block eingefügt wird, bildet sich eine Kette. Die Transaktionen sind somit vor Manipulationen geschützt, da eine Kette bis zu einem initialen Block durch die Verkettung der Blöcke nachvollzogen werden kann. Da die Transaktionen über das Blockchain-Netz verfügbar sind, kann nachvollzogen werden, ab welchem Block in der Kette beispielsweise ein Inhalt einer Transaktion nicht mehr mit der vorherigen Version übereinstimmt. Die Transaktionen sind manipulationsgeschützt in jeder verifizierten Blockchain hinterlegt. Ein Abändern einer Transaktion in einem Block, der bereits zu einem früheren Zeitpunkt im Netzwerk gebildet wurde, würde nachvollzogen werden können, wenn eine Prüfsummenbildung über die bestehenden Blöcke nachvollzogen wird.

Die Erfindung macht sich nun zu Nutze, dass eine Blockchain-Datenstruktur hier nicht einheitlich sämtliche Lizenzen für sämtliche Geräte von sämtlichen Anwendern umfasst und öffentlich zugänglich ist, sondern diese praktisch zerteilt wird und für jeden Anwender eine eigene sogenannte Sidechain gebildet wird. Diese Sidechain ist prinzipiell aufgebaut wie eine Blockchain als eine Folge von Blöcken mit Transaktionsdaten, jedoch enthalten die Transaktionsdaten lediglich Informationen betreffend einen Anwender. Bevorzugt ist nicht öffentlich einsehbar, welcher Anwender gerade über welche Lizenz verfügt. Mit anderen Worten kann auf der einen Seite so die hohe Datensicherheit von non-fungible Tokens als digitale Zwillinge der Lizenz genutzt werden, gleichzeitig wird aber eine Vertraulichkeit der Daten des einzelnen Anwenders gewährleistet, da diese Transaktionsdaten aufgrund deren Unterbringung in einer Sidechain nicht für die gesamte Öffentlichkeit einsehbar sind. Bevorzugt hat der jeweilige Anwender lediglich Zugang zu den seine Geräte betreffenden Sidechains.

Die Blockchain-Datenstruktur kann bezogen auf ein Softwareprodukt ausgebildet sein. Das bedeutet, dass verschiedene Softwareprodukte unterschiedliche Blockchain-Datenstrukturen zur Lizenzverwaltung nutzen können. Damit kann auch jede anwenderbezogene Sidechain bezogen auf ein Softwareprodukt ausgebildet sein. Mit anderen Worten betrifft in diesem Fall die Sidechain nicht nur einen spezifischen Anwender, sondern auch ein spezifisches Softwareprodukt. Eine Auftrennung in unterschiedliche, jeweils softwareproduktbezogene Blockchain-Datenstrukturen kann auf Basis von Smart Contracts erfolgen.

Ein Wallet ist insbesondere eine Software, die es ermöglicht, digitale Objekte wie non-fungible Tokens zu speichern.

Bei dem Gerät kann es sich praktisch um ein beliebiges technisches Gerät handeln. Das Gerät kann eine Hardware umfassen und mindestens eine Software oder ein Softwareprodukt. Insbesondere kann die Lizenz dazu dienen, die Software auf einem Gerät zur Benutzung freizugeben. Bei dem Gerät kann es sich insbesondere um ein Gerät handeln, welches Sensoren zum Erfassen von Betriebsparametern in einem Produktionsprozess umfasst oder mit solchen verbunden ist. Das Gerät kann eine Rechnereinheit und/oder Speichermittel aufweisen, auf welchen eine Software oder ein Softwareprodukt gespeichert ist und ablaufen kann. Die Lizenz kann sich insbesondere auf die Freigabe von Software oder eines Softwareprodukts auf diesem Gerät beziehen. Bei der Software bzw. dem Softwareprodukt kann es sich zum Beispiel um eine Betriebssoftware und/oder eine Steuerungssoftware und/oder eine Konfigurationssoftware zum Einrichten von technischen Geräten oder Anlagen handeln. Das Gerät kann ferner ausgebildet sein, mit anderen Geräten eines Netzwerks zu kommunizieren. Hierzu kann es in an sich bekannter Weise kabellose oder kabelgebundene Schnittstellen aufweisen.

In weiterer Ausgestaltung kann das non-fungible Token auf Basis eines Smart Contracts bereitgestellt oder erzeugt werden. Ein solcher Smart Contract vereinbart bestimmte Bedingungen, die in der Blockchain-Datenstruktur hinterlegt sind. Insbesondere ist ein Smart Contract als wenndann-Bedingung definiert. Wenn eine bestimmte Bedingung somit erfüllt ist, wird der Vertrag automatisch über das Netzwerk abgewickelt. Eine externe Überprüfung der Vertragsbedingungen, wie es beispielsweise bei einem Immobilienkauf bei einem Notar stattfindet, ist nicht erforderlich, da ein Smart Contract automatisch bei Erfüllung der Bedingungen ausgeführt wird.

In weiterer Ausgestaltung des erfindungsgemäßen Verfahrens kann das non-fungible Token nach dem ERC721-Standard bereitgestellt oder erzeugt werden und/oder das Übertragen des non-fungible Tokens kann nach dem ERC721-Standard erfolgen. Bei dem ERC721-Standard handelt es sich um eine Blockchain-Datenstruktur basierend auf Ethereum. Insbesondere kann eine Ethereum Virtual Machine benutzt werden, um die Vereinbarungen in einem Smart Contract zu beurteilen. Möglich ist auch die Verwendung anderer Blockchain- Standards, beispielsweise Solana.

Das non-fungible Token kann auf einem privaten Lizensierungs-Netzwerk bereitgestellt oder von einem solchen erzeugt werden. Das bedeutet, dass ein Anbieter, welcher beispielsweise ein solches privates Lizensierungs-Netzwerk besitzt oder bereitstellt, definiert non-fungible Tokens erstellen kann, wenn eine Lizenz von einem Anwender benötigt, angefordert und/oder erworben wird. Damit hat der Anbieter die vollständige Kontrolle über das Kreieren von Lizenzen. Insbesondere kann jedem Softwareprodukt ein eigener Smart-Contract zugeordnet werden. Auf Basis dieses Smart-Contracts kann die jeweilige Sidechain erzeugt oder bereitgestellt werden.

Dieser Ausgestaltung liegt die Überlegung zugrunde, dass nur bestimmte Teilnehmer im Netzwerk, nämlich das private Lizensierungs-Netzwerk, überhaupt berechtigt ist, Lizenzen bzw. dazu korrespondierende non-fungible Tokens zu erstellen. Ein Erstellen von Lizenzen durch andere Teilnehmer, insbesondere ein missbräuchliches Erstellen von Lizenzen durch Anwender, ist damit nicht möglich. Konkret kann das Erstellen von Lizenzen auf bestimmte Knoten des Blockchain-Netzes beschränkt sein. Hierbei handelt es sich um das Proof-of-Authority-Konzept. Es werden also nicht bestimmte Rechenoperationen durchgeführt (Proof of Work), sondern das Mining von non-fungible Tokens, d.h. der Prozess des Erzeugens von non-fungible Tokens ist auf bestimmte Knoten, konkret ein privates Lizensierungs-Netzwerk, beschränkt. Dementsprechend kann das private Lizensierungs-Netzwerk bestimmte Knoten des Blockchain-Netzwerks umfassen bzw. daraus bestehen.

Auf diese Weise kann sichergestellt werden, dass der Anbieter der Geräte den Überblick behält, welcher Anwender welche Lizenzen zu einem Zeitpunkt besitzt. Dadurch, dass jedem Anwender eine eigene Sidechain zugeordnet ist, können auch nicht ohne weiteres Lizenzen, d.h. non-fungible Tokens, von einem Anbieter zu einem anderen transferiert werden.

Dementsprechend kann das private Lizensierungs-Netzwerk Zugang zu der gesamten Blockchain-Datenstruktur besitzen, wohingegen bevorzugt ein Anwender bevorzugt nur Zugang zu den ihn betreffenden Sidechains hat.

In weiterer Ausgestaltung ist das Wallet, in welchen das non-fungible Token beim Übertragen einer Lizenz transferiert wird, auf dem jeweiligen Gerät angeordnet und/oder mit diesem gekoppelt.

In weiterer Ausgestaltung können mehrere Wallets bezogen auf ein Gerät und einen Anwender vorgesehen sein. Das bedeutet, dass ein Gerät nicht nur ein Wallet haben kann, sondern mehrere Wallets möglich sind, so dass ein non-fungible Token wahlweise in einem der Wallets abgelegt wird.

Das Verfahren kann auch das Übertragen eines non-fungible Tokens von dem Wallet eines Geräts in ein Wallet eines anderen Geräts bevorzugt eines Anwenders umfassen. Beispielsweise kann ein Anwender, wenn er ein Gerät über einen bestimmten Zeitraum nicht nutzen möchte, in diesem Zeitraum die dieses Gerät betreffende Lizenz an ein anderes Gerät übertragen. Dazu wird das non-fungible Token, welches diese Lizenz repräsentiert, von dem einen Wallet in ein anderes Wallet übertragen. Die Transaktionsdaten betreffend diese Übertragung werden bevorzugt in der Blockchain-Datenstruktur, konkret in den beiden Sidechains betreffend die an der Transaktion beteiligten Geräte, abgelegt. Konkret kann der Anwender die Transaktion ausführen.

Prinzipiell denkbar ist es auch, die Lizenzen von einem Gerät eines Anwenders an ein Gerät eines anderen Anwenders zu übertragen. In diesem Fall werden die non-fungible Tokens von dem entsprechenden gerätebezogenen Wallets eines Geräts in das gerätebezogene Wallet des anderen Geräts eines anderen Anwenders übertragen. Möglich ist, dass diese Übertragung direkt erfolgt. Denkbar ist auch, dass eine solche Übertragung zwischen zwei verschiedenen Anwendern über das private Lizensierungs-Netzwerk abläuft und/oder die Zustimmung des Anbieters erfordert.

Die Übergabe kann durch das Wallet, in welchem das non-fungible Token enthalten war, signiert werden. Insbesondere auf einem Rechner des Anwenders kann die Sidechain um die Transaktionsdaten betreffend die Übertragung des non-fungible Token ergänzt werden. Die Blockchain- Datenstruktur kann dann im Blockchain-Netz synchronisiert werden, so dass der Besitzübergang registriert und sicher hinterlegt wird. Dadurch erhält das neue Gerät des gleichen oder eines anderen Anwenders das non-fungible Token, so dass das Gerät zur Benutzung freigegeben wird. Eine solche Vorgehensweise kann auch als private Transaktion bezeichnet werden.

Bevorzugt werden die non-fungible Tokens hinsichtlich ihrer Sicherheitsstufe klassifiziert. Das bedeutet, dass unterschiedliche Sicherheitsstufen möglich sind. Konkret kann die Klassifizierung beim Erzeugen und/oder Bereitstellen des non-fungible Tokens durch das private Lizensierungs-Netzwerk des Anbieters vorgenommen werden.

Beispielsweise können non-fungible Tokens einer Hochsicherheitsklasse zugeordnet werden, was bedeutet, dass die entsprechende Lizenz an ein Gerät gebunden ist und nicht ohne eine Nachverfolgung durch das private Lizensierungs-Netzwerk an ein anderes Gerät übertragen werden kann. Möglich ist auch, dass ein Übertragen eines non-fungible Tokens dieser Sicherheitsstufe an ein anderes Gerät eine aktive Zustimmung des privaten Lizensierungs-Netzwerks erfordert. Dementsprechend kann das Verfahren dadurch gekennzeichnet sein, dass ein non-fungible Token der Hochsicherheitsklasse nicht ohne Rückmeldung an das private Lizensierungs-Netzwerk oder ohne dessen Zustimmung vom Wallet eines Geräts an ein Wallet eines anderen Geräts übertragen werden kann.

Eine andere, weniger hohe Sicherheitsstufe (insbesondere eine Mittelsicherheitsklasse von non-fungible Tokens) kann beinhalten, dass das entsprechende Softwareprodukt verlangt, dass ein non-fungible Token an das jeweilige Gerät gebunden wird, während es benutzt werden soll. Allerdings kann es durch den Anwender an andere Geräte übertragen werden, ohne dass das private Lizensierungs-Netzwerk dieser Übertragung zustimmen muss. Mit anderen Worten kann das Verfahren dadurch gekennzeichnet sein, dass ein non-fungible Token der Mittelsicherheitsklasse ohne direkte Nachverfolgung oder Freigabe durch das private Lizensierungs-Netzwerk vom Wallet eines Geräts an ein Wallet eines anderen Geräts übertragen werden kann. Das private Lizensierungs-Netzwerk kann durch das Synchronisieren der Blockchain-Datenstruktur zumindest zeitversetzt die Information der Übertragung des non-fungible Tokens erhalten.

Non-fungible Tokens können auch einer noch niedrigeren Sicherheitsstufe zugeordnet werden, wenn es lediglich darum geht, ein einfaches Klonen von Lizenzen zu verhindern.

Die gerätebezogenen Wallets können derart zugriffsgeschützt sein, dass nur bestimmte Softwareprodukte, die bevorzugt auf dem betreffenden Gerät installiert sind, Zugriff haben. Dadurch kann sichergestellt werden, dass die Wallets nicht kopiert werden können. Konkret können dazu sogenannte Credentials verwendet werden. Hierbei handelt es sich um spezifische Softwaremittel, die nur von bestimmten Softwareprodukten und/oder von einem bestimmten Gerät aus geöffnet werden können.

Konkret können die non-fungible Tokens abhängig von ihrer Sicherheitsstufe in unterschiedliche Wallets übertragen werden. Mit anderen Worten kann jeder Sicherheitsstufe eine andere Art von Wallets zugeordnet werden. Bevorzugt kann ein Wallet für eine niedrige und eine mittlere Sicherheitsstufe durch eine Übertragung nach dem ERC721-Transfer und handelsüblichen Walleteinrichtungen gekennzeichnet sein. Bei der mittleren Sicherheitsstufe kann vorgesehen sein, dass die Daten in dem Wallet verschlüsselt werden und nur durch bestimmte Produkte, d. h. Geräte und/oder darauf installierte Software, des Anbieters entschlüsselt werden können.

Ein Wallet, welches für die Hochsicherheitsklasse von non-fungible Tokens vorgesehen ist, bindet bevorzugt den Inhalt an ein spezifisches Gerät, so dass die Übertragung des non-fungible Tokens nur möglich ist vom privaten Lizensierungs-Netzwerk aus. Hierzu kann beispielsweise eine Trusted Execution Environment (TEE) verwendet werden. Eine solche Trusted Execution Environment (TEE)ist eine sichere und vertrauenswürdige Laufzeitumgebung für Applikationen. Konkret kann es sich hier um die TPM 2.0 (Trusted Platform Module) Infrastruktur handeln. Dadurch wird sichergestellt, dass das jeweilige Gerät eindeutig identifiziert wird. Dabei werden gerätespezifische kryptographische Schlüssel bereitgestellt. Die kryptographischen Schlüssel von jedem Gerät werden benutzt für die Entschlüsselung des Inhalts des Wallets. Wird ein solches Wallet kopiert, kann der darin enthaltene non-fungible Token nicht genutzt werden, da die gerätespezifischen kryptographischen Schlüssel fehlen. Mit anderen Worten wird sichergestellt, dass die kryptographischen Schlüssel nicht exportiert werden können.

Möglich ist auch, dass lediglich ein Wallet für sämtliche non-fungible Tokens vorgesehen sind, wobei jedoch Sicherheitsmaßnahmen vorgesehen sind, um die jeweiligen Sicherheitsstufen zu realisieren.

Eine Deaktivierung einer Lizenz geht dabei mit einer Trennung des non-fungible Tokens von dem Gerät einher und bedeutet in der Regel eine Übertragung bevorzugt nach dem ERC721-Standard zu dem privaten Lizensierungs-Netzwerk. Anschließend befindet sich der non-fungible Token im Wallet des Lizensierungs- Netzwerks und kann durch den Anwender an ein anderes Gerät übertragen werden.

Auf diese Weise kann der Anbieter, welcher das private Lizensierungs-Netzwerk betreibt, sicherstellen, dass keine unautorisierten non-fungible Tokens erstellt bzw. ohne seine Zustimmung übertragen werden, wenn die entsprechende Sicherheitsstufe betroffen ist.

Gleichzeitig entsteht eine hohe Transparenz für den Anwender, da er jederzeit die ihn betreffenden non-fungible Tokens kontrollieren kann und deren genaue Zuordnung zu den einzelnen Geräten nachvollziehen kann.

Das Verfahren kann ferner die Zerstörung eines non-fungible Tokens umfassen, um das jeweilige Gerät bzw. eine Funktionalität oder ein darauf enthaltenes Softwareprodukt zur weiteren Benutzung durch den Anwender zu sperren. Mit anderen Worten kann gezielt insbesondere durch einen Anbieter, ausgehend von dem privaten Lizensierungs-Netzwerk, ein non-fungible Token zerstört werden, so dass das entsprechende Gerät bzw. eine entsprechende Funktionalität, insbesondere ein Softwareprodukt, nicht mehr genutzt werden kann. Dazu kann eine entsprechende Funktionalität in dem Smart Contract vorgesehen sein.

Die Daten betreffend die Zerstörung des jeweiligen non-fungible Tokens können in der jeweiligen geräte- und anwenderbezogenen Sidechain abgelegt werden. Es kann vorgesehen sein, dass die Zerstörung eines non-fungible Tokens nur durch einen begrenzten Personenkreis initiiert werden kann. Insbesondere kann es sich hierbei um bestimmte Mitarbeiter eines Anbieters handeln. Konkret kann der Zerstörung eines non-fungible Tokens eine Identifizierung des Initiators, beispielsweise eines Mitarbeiters eines Anbieters, vorausgehen.

Ferner kann die Zerstörung eines non-fungible Tokens durch das private Lizensierungsnetzwerk freigegeben werden. In diesem Fall kann die Blockchain-Datenstruktur, insbesondere die betroffene Sidechain, synchronisiert werden, so dass der Widerruf der Lizenz unmittelbar wirksam wird.

Das Verfahren kann ferner dadurch ausgestaltet sein, dass zumindest alle 30 Tage eine Synchronisierung des Geräts mit anderen Knoten stattfinden muss. Es kann vorgesehen sein, dass, wenn diese Zeitspanne überschritten wird, automatisch alle betroffenen non-fungible Tokens widerrufen werden bzw. blockiert werden, so dass die betroffenen Geräte dann lediglich über eine Testlizenz verfügen.

Dadurch kann das Gerät zumindest bzw. lediglich eingeschränkt weiter genutzt werden.

Die der Erfindung zugrunde liegende Aufgabe ist ferner gelöst durch ein Computerprogramm-Produkt, welches ausgebildet ist, das zuvor beschriebene Verfahren durchzuführen, wenn das Computerprogramm-Produkt auf einem Rechner oder auf einem Rechnernetzwerk installiert ist. Ferner ist die Aufgabe gelöst durch ein computerlesbares Medium, auf welchem dieses Computerprogramm-Produkt gespeichert ist.

Darüber hinaus ist die der Erfindung zugrunde liegende Aufgabe gelöst durch ein System zum Verwalten von Lizenzen für Geräte von Anwendern, umfassend
ein privates Lizensierungs-Netzwerk, welches ausgebildet ist, non-fungible Tokens, welche jeweils eine Lizenz für ein Gerät repräsentieren, bereitzustellen und/oder zu erzeugen,
mindestens ein Gerät, insbesondere eine Vielzahl von Geräten, von mindestens einem, insbesondere von mehreren Anwendern, welche jeweils ein geräte- und anwenderbezogenes Wallet für non-fungible Tokens enthalten oder an ein solches gekoppelt sind,
so dass non-fungible Tokens von dem privaten Lizensierungs-Netzwerk an ein Wallet übertragen werden können, um das jeweilige Gerät zur Benutzung freizugeben, wobei Transaktionsdaten betreffend die Übertragung in einem Block einer dem jeweiligen Anwender zugeordneten Sidechain einer Blockchain-Datenstruktur abgelegt werden.

Bevorzugt ist das private Lizensierungs-Netzwerk ausgebildet, auf die gesamte Blockchain-Datenstruktur, d.h. auf sämtliche Sidechains, zuzugreifen.

Für die weitere Ausgestaltung der Erfindung wird auf die Unteransprüche und auf die nachfolgende Beschreibung eines Ausführungsbeispiels unter Bezugnahme auf die Zeichnung verwiesen.

In der Zeichnung zeigen:
- Figur 1: ein System gemäß der vorliegenden Erfindung in schematischer Darstellung;
- Figur 2: das erfindungsgemäße Verfahren in einer schematischen Darstellung;
- Figur 3: eine Blockchain-Datenstruktur, welche das System verwendet; und
- Figur 4: ein Teil des Verfahrens aus Figur 2 in einer detaillierten schematischen Darstellung.

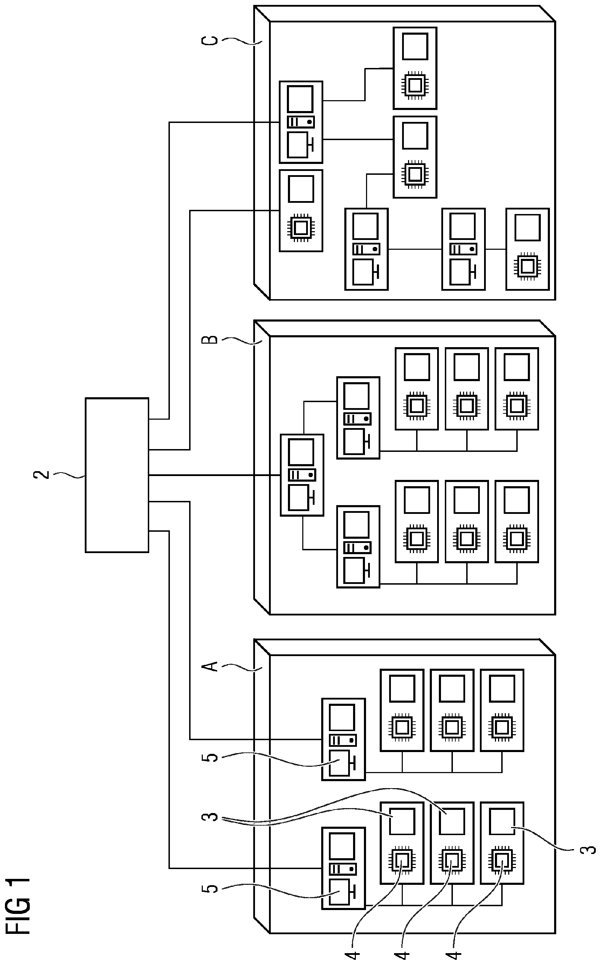

Die Figur 1 zeigt ein erfindungsgemäßes System zum Verwalten von Lizenzen für Geräte, insbesondere für Funktionalitäten von Geräten, bevorzugt für Softwareprodukte auf Geräten, von Anwendern. Beispielhaft sind dabei drei verschiedene Anwender A, B und C vorgesehen.

Das System 1 umfasst ein privates Lizensierungs-Netzwerk 2, welches schematisch dargestellt ist. Ferner umfasst das System eine Vielzahl von Geräten 3, welche jeweils eine Rechnereinheit 4 in Form einer CPU enthalten. Bei diesen Geräten 3 kann es sich um beliebige praktische Geräte handeln. Beispielsweise kann es sich hier um Steuereinrichtungen oder um Geräte mit Sensoren oder um Geräte zur Datenverarbeitung handeln. Möglich ist auch, dass es sich bei den Geräten 3 um Industrie-PCs oder um speicherprogrammierbare Steuerungen handelt oder die Geräte eine solche umfassen. Die Geräte 3 sind den verschiedenen Anwendern A, B und C zugeordnet und in unterschiedlichen Hierarchien, welche hier lediglich beispielhaft dargestellt sind, strukturiert. Vorliegend hat der Anwender A eine schneeflockenartige Topologie. Die einzelnen Geräte 3 sind gruppiert und jeweils ein PC 5, der als Mediator fungiert, ist zwischen den einzelnen Geräten und dem Lizensierungs-Netzwerk 2 angeordnet.

Der Anwender B hat mehrere PCs 5, welche als Mediator fungieren und zwischen den Geräten 3 und dem Lizensierungs-Netzwerk angeordnet sind.

Beim Anwender C ist eine deutlich komplexere, weitgehend beliebige Topologie zu erkennen. Teilweise sind die Geräte 3 direkt mit dem Lizensierungs-Netzwerk 2 über das Internet verbunden. Bei anderen Geräten 3 sind eine oder mehrere PCs 5 zwischengeschaltet.

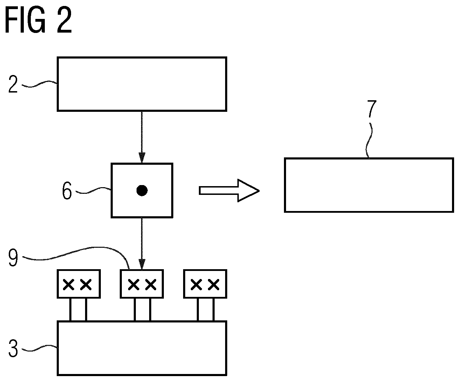

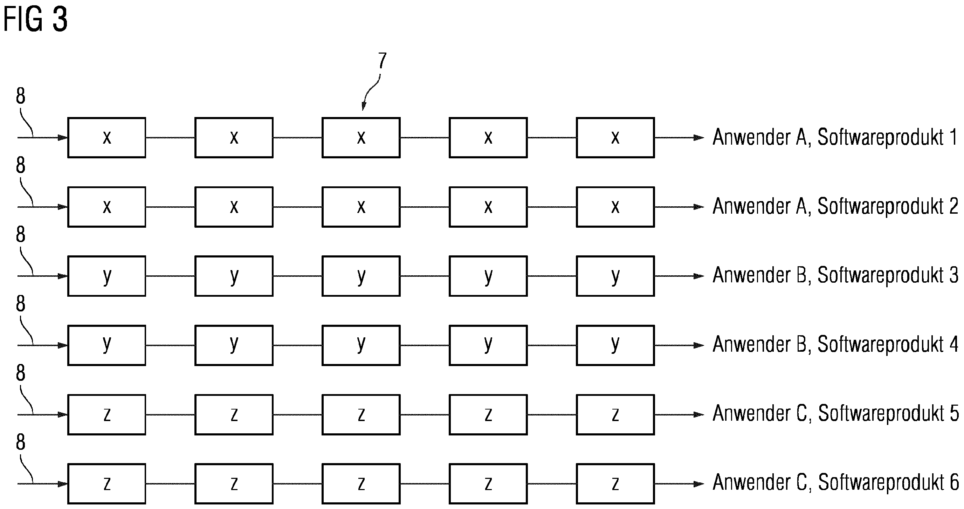

Die Figur 2 zeigt nun das erfindungsgemäße Verfahren. Das private Lizensierungs-Netzwerk 2, welches von einem Anbieter betrieben wird, ist ausgebildet, non-fungible Tokens 6, welche jeweils eine Lizenz für ein Gerät 3, insbesondere für eine Funktionalität des Geräts 3, bevorzugt für ein Softwareprodukt auf diesem Gerät 3, repräsentieren, bereitzustellen und zu erzeugen. Das Verfahren umfasst ferner das Bereitstellen oder Erzeugen einer Blockchain-Datenstruktur 7, welche in der Figur 3 im Detail dargestellt ist. Die Blockchain- Datenstruktur 7 ist dabei bezogen auf ein Softwareprodukt ausgebildet, d.h. es ist vorgesehen, dass für jedes unterschiedliche Softwareprodukt eine eigene, separate Blockchain- Datenstruktur 7 besteht. Konkret umfasst die Blockchain-Datenstruktur 7 dem jeweiligen Anwender zugeordnet eine Sidechain 8. Mit anderen Worten ist die Blockchain-Datenstruktur 7 zerteilt in eine Vielzahl von separaten Sidechains 8, welche ihrerseits eine eigene Blockchain jeweils bilden. Die jeweiligen Sidechains 8 betreffend die jeweiligen Anwender können nur von dem jeweiligen Anwender eingesehen werden, wo hingegen das private Lizensierungs-Netzwerk 2 Zugriff auf die Daten sämtlicher Sidechains 8, somit der gesamten Blockchain-Datenstruktur 7 hat.

Das non-fungible Token 6, welches von dem privaten Lizensierungs-Netzwerk 2 erzeugt oder bereitgestellt wurde, wird an ein geräte- und anwenderbezogenes Wallet 9 für non-fungible Tokens übertragen. Durch das Übertragen an das Wallet 9 wird das Gerät 3, insbesondere eine Funktionalität des Geräts 3, bevorzugt ein Softwareprodukt auf dem Gerät 3, zur Benutzung durch den Anwender freigegeben. Mehrere Wallets 9 sind dabei dem jeweiligen Gerät 3 zugeordnet bzw. an dieses gekoppelt. Konkret sind vorliegend drei Wallets 9 dem Gerät 3 zugeordnet.

Die non-fungible Tokens 6 werden grundsätzlich abhängig von ihrer Sicherheitsstufe in unterschiedliche Wallets 9 übertragen. Konkret ist eine Hochsicherheits-Klasse von non-fungible Tokens 6 an ein Gerät 3 gebunden und kann nicht ohne Rückmeldung an das private Lizensierungs-Netzwerk 2 oder ohne dessen Zustimmung von einem Wallet 9 eines Geräts 3 auf ein Wallet 9 eines anderen Geräts 3 übertragen werden.

Eine Mittelsicherheitsklasse von non-fungible Tokens 6 ist jeweils an das Gerät 3 gebunden, eine Übertragung ist allerdings ohne direkte Rückmeldung an und Zustimmung durch das Lizensierungs-Netzwerk 2 möglich. Eine Niedrigsicherheits-Klasse von non-fungible Tokens 9 kann zwischen verschiedenen Geräten übertragen werden, ohne dass eine Rückmeldung an das private Lizensierungs-Netzwerk 2 erfolgt. Hier geht es nur darum, dass ein unberechtigtes Kopieren der non-fungible Tokens 6 und damit der Lizenzen verhindert werden kann. Die Klassifizierung der non-fungible Tokens 6 erfolgt dabei durch das private Lizensierungs-Netzwerk.

Dem entsprechend ist eines der drei Wallets 3 für non-fungible Tokens 6 der Hochsicherheits-Klasse vorgesehen, ein weiteres für non-fungible Tokens 6 der Mittelsicherheits-Klasse und ein drittes Wallet 9 für non-fungible Tokens 6 der Niedrigsicherheits-Klasse.

Wenn ein non-fungible Token 6 übertragen wird, vorliegend von dem privaten Lizensierungs-Netzwerk 2 in ein Wallet 9 eines Geräts 3, so werden Transaktionsdaten betreffend die Übertragung in einem Block der jeweiligen Sidechain 8 abgelegt. Auf diese Weise wird das non-fungible Token 6, welches eine Lizenz für ein Gerät 3, insbesondere für eine Funktionalität des Geräts 3, bevorzugt für ein darauf enthaltenes Softwareprodukt, repräsentiert, dem jeweiligen Gerät 3 manipulationssicher zugeordnet.

Da die Transaktionsdaten in der Blockchain-Datenstruktur 7, konkret in einer darin enthaltenen Sidechain 8 gespeichert werden und auf einer Vielzahl von Knoten in einem Blockchain-Netz oder -Netzwerk abgelegt werden und regelmäßig synchronisiert werden, ist eine hohe Manipulationssicherheit gegeben. Aufgrund der Bindung der Lizenzen an non-fungible Tokens 6 ist ein unberechtigtes Vervielfältigen von Lizenzen ausgeschlossen.

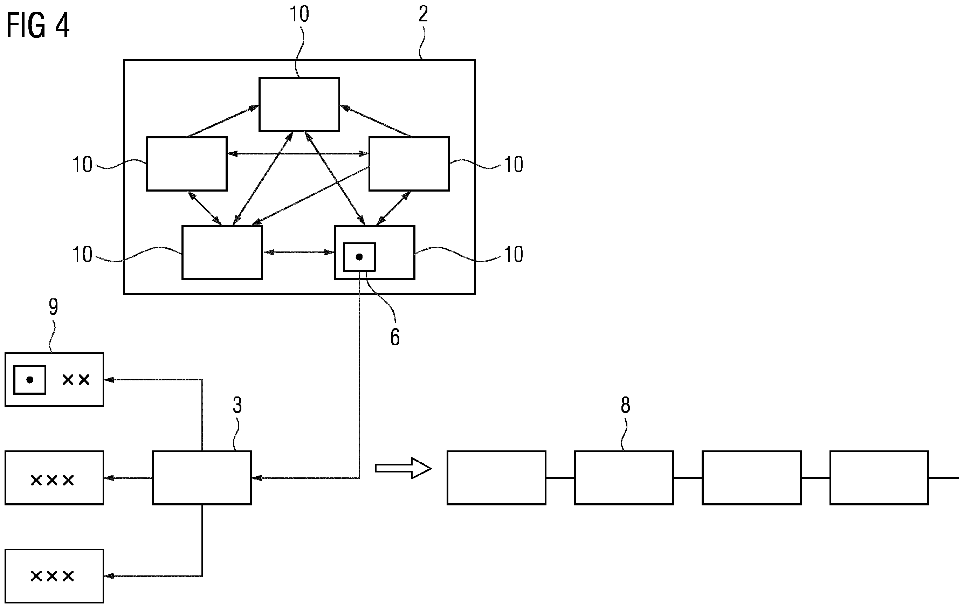

Das private Lizensierung-Netzwerk 2 kann eine Vielzahl von Knoten 10 beinhalten, wie dies beispielhaft in Figur 4 dargestellt ist. Die Knoten 10 des privaten Lizensierungs-Netzwerks 2 können dabei ein Bestandteil des Blockchain-Netzes sein. In der Figur 4 ist noch einmal die Übertragung eines non-fungible Tokens 6 auf ein Wallet 9, welches mit einem Gerät 3 gekoppelt bzw. mit diesem verbunden ist, im Detail dargestellt. Die Transaktionsdaten betreffen die Übertragung werden in dem Block der Sidechain 8 abgelegt.

Durch die Bindung der Lizenzen an non-fungible Tokens 6 kann ein unberechtigtes Vervielfältigen durch die Anwender verhindert werden, da non-fungible Token 6 einzigartig sind und nicht vervielfältigt werden können. Durch das Ablegen der Transaktionsdaten in einer Blockchain-Datenstruktur 7, die in einer Vielzahl von Knoten permanent synchronisiert wird, ist eine hohe Manipulationssicherheit gegeben. Ferner kann durch das praktische Zerschneiden der Blockchain-Datenstruktur 7 in eine Vielzahl von Sidechains 8 eine hohe Datensicherheit erreicht werden, da die jeweiligen Anwender nur Zugang zu den Sie betreffenden Sidechains haben. Hingegen kann der Anbieter, welcher das private Lizensierungs-Netzwerk 2 betreibt, Zugang zu allen Sidechains 8 der Blockchain-Datenstruktur 7 haben, sodass er jederzeit einen Überblick über die vorhandenen non-fungible Tokens 6 und damit die Lizenzen für die Geräte hat.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren, insbesondere computergestütztes Verfahren, zum Verwalten von Lizenzen für Geräte (3), insbesondere für Funktionalitäten von Geräten (3), bevorzugt für Softwareprodukten auf Geräten (3), von Anwendern, wobei das Verfahren die folgenden Schritte aufweist:
- Bereitstellen oder Erzeugen einer Blockchain- Datenstruktur, welche eine dem jeweiligen Anwender zugeordnete Sidechain (8) aufweist;
- Bereitstellen oder Erzeugen eines non-fungible Tokens (6), welcher eine Lizenz für ein Gerät (3) repräsentiert;
- Übertragen des non-fungible Tokens (6) in ein geräte- und anwenderbezogenes Wallet (9), um das Gerät (3), insbesondere eine Funktionalität des Geräts (3), bevorzugt ein Softwareprodukt auf dem Gerät (3), zur Benutzung durch den Anwender freizugeben, wobei Transaktionsdaten betreffend die Übertragung in einem Block der jeweiligen Sidechain (8) abgelegt werden.

2. Verfahren nach Anspruch 1, **dadurch gekennzeichnet, dass** das non-fungible Token (6) auf Basis eines Smart Contract bereitgestellt oder erzeugt wird, und/oder dass das non-fungible Token (6) nach dem ERC721-Standard bereitgestellt oder erzeugt wird, und/oder dass das Übertragen des non-fungible Tokens (6) nach dem ERC721-Standard erfolgt.

3. Verfahren nach einem der vorherigen Ansprüche, **dadurch gekennzeichnet, dass** das non-fungible Token (6) auf einem privaten Lizensierungs-Netzwerk (2) bereitgestellt oder von einem solchen erzeugt wird, wobei, insbesondere, lediglich das private Lizensierungs-Netzwerk (2) berechtigt ist, non-fungible Tokens (6) bereitzustellen oder zu erzeugen, und/oder wobei, insbesondere, das private Lizensierungs-Netzwerk (2) Zugang zu der gesamten Blockchain-Datenstruktur (7) besitzt.

4. Verfahren nach einem der vorherigen Ansprüche, **dadurch gekennzeichnet, dass** das Wallet (9) auf dem jeweiligen Gerät (3) angeordnet ist und/oder mit diesem gekoppelt ist.

5. Verfahren nach einem der vorherigen Ansprüche, **dadurch gekennzeichnet, dass** mehrere Wallets (9) bezogen auf ein Gerät (3) und einen Anwender vorgesehen sind.

6. Verfahren nach einem der vorherigen Ansprüche, **dadurch gekennzeichnet, dass** die non-fungible Tokens (6) klassifiziert werden hinsichtlich ihrer Sicherheitsstufe.

7. Verfahren nach Anspruch 5 und Anspruch 6, **dadurch gekennzeichnet, dass** die non-fungible Tokens (6) abhängig von ihrer Sicherheitsstufe in unterschiedliche Wallets (9) übertragen werden.

8. Verfahren nach Anspruch 6 oder 7 und nach Anspruch 3, **dadurch gekennzeichnet, dass** eine Hochsicherheits-Klasse von non-fungible Tokens (6) an ein Gerät (3) gebunden wird/ist und nicht ohne Rückmeldung an das private Lizensierungs-Netzwerk (2) oder ohne Zustimmung des privaten Lizensierungs-Netzwerks (2) von einem Wallet (9) eines Geräts (3) auf ein Wallet (9) eines anderen Geräts (3) übertragen werden kann, wobei, insbesondere, die Hochsicherheits-Klasse von non-fungible Tokens (6) zur Übertragung von einem Gerät (3) auf ein anderes Ziel-Gerät (3) zunächst an das private Lizensierungs-Netzwerk (2) und anschließend an das Ziel-Gerät (3) übertragen wird.

9. Verfahren nach einem der Ansprüche 6 bis 8, **dadurch gekennzeichnet, dass** eine Mittelsicherheits-Klasse von non-fungible Tokens (6) an das jeweilige Gerät (3) gebunden wird/ist, und/oder dass eine Niedrigsicherheits-Klasse von non-fungible Tokens (6) zwischen verschiedenen Geräten (3) übertragen werden kann, ohne dass eine Rückmeldung an das private Lizensierungs-Netzwerk (2) erfolgt.

10. Verfahren nach einem der vorherigen Ansprüche, **dadurch gekennzeichnet, dass** das Verfahren ferner die Zerstörung eines non-fungible Tokens (6) umfasst, um das jeweilige Gerät (3) zur Benutzung durch den Anwender zu sperren, wobei, insbesondere, Daten betreffend die Zerstörung des non-fungible Token (6) in der jeweiligen anwenderbezogenen Sidechain (8) abgelegt wird.

11. Verfahren nach Anspruch 10, **dadurch gekennzeichnet, dass** die Zerstörung eines non-fungible Tokens (6) nur durch einen begrenzten Personenkreis initiiert werden kann.

12. Verfahren nach Anspruch 11, **dadurch gekennzeichnet, dass** der Zerstörung eines non-fungible Tokens (6) eine Identifikation des Initiators vorausgeht, wobei, insbesondere, die Zerstörung eines non-fungible Tokens (6) durch das private Lizensierungs-Netzwerk (2) freigegeben wird.

13. Computerprogramm-Produkt, welches ausgebildet ist, das Verfahren nach einem der vorherigen Ansprüche durchzuführen, wenn es auf einem Rechner oder auf einem Rechnernetzwerk installiert ist.

14. Computerlesbares Medium, auf welchem das Computerprogramm-Produkt nach Anspruch 13 gespeichert ist.

15. System (1) zum Verwalten von Lizenzen für Geräte (3), insbesondere für Funktionalitäten von Geräten, bevorzugt von Softwareprodukten auf Geräten (3), von Anwendern, umfassend
ein privates Lizensierungs-Netzwerk (2), welches ausgebildet ist, non-fungible Tokens (6), welche jeweils eine Lizenz für ein Gerät (3) repräsentieren, bereitzustellen und/oder zu erzeugen,
mindestens ein Gerät (3), insbesondere eine Vielzahl von Geräten (3), von mindestens einem, insbesondere mehreren Anwendern, welche jeweils mindestens ein geräte- und anwenderbezogenes Wallet (9) für non-fungible Tokens (6) enthalten oder an ein solches gekoppelt sind,
so dass non-fungible Tokens (6) von dem privaten Lizensierungs-Netzwerk (2) an ein Wallet (9) übertragen werden können, um das jeweilige Gerät (3) zur Benutzung freizugeben, wobei Transaktionsdaten betreffend die Übertragung in einem Block einer dem jeweiligen Anwender zugeordneten Sidechain (8) einer Blockchain-Datenstruktur (7) abgelegt werden, wobei, insbesondere, das private Lizensierungs-Netzwerk (2) ausgebildet ist, auf die gesamte Blockchain-Datenstruktur (7) zuzugreifen.
